# FASCICULE DE BREVET EUROPEEN

(11) **EP 2 170 038 B1**
(45) Date de publication et mention de la délivrance du brevet: **24.08.2011**
(21) Numéro de dépôt: 08836616.6
(22) Date de dépôt: 18.07.2008
(51) Int. Cl.: A01K 97/04, B65D 21/02

(54) **BOITES DE CONDITIONNEMENT POUR VERS DE MER ET EMBALLAGE CORRESPONDANT**
LAGERUNGSKÄSTEN FÜR MEERESWÜRMER UND ENTSPRECHENDE VERPACKUNG
STORAGE BOXES FOR SEA WORMS AND CORRESPONDING PACKAGING

(30) Priorité: 18.07.2007 FR 0705191
(43) Date de publication de la demande: 07.04.2010
(73) Titulaire: Normandie Appats, 14860 Ranville (FR)
(72) Inventeur: LOPUSZANSKI, Michel, 14123 Cormelles-le-Royal (FR)
(74) Mandataire: Benech, Frédéric
(86) Numéro de dépôt international: PCT/FR2008/001071
(87) Numéro de publication internationale: WO 2009/043990

(56) Documents cités:
- CA-A1- 2 268 998
- DE-B- 1 176 052
- DE-B3-102006 001 065
- DE-U1-202007 005 651
- FR-A- 2 409 212
- NL-C2- 1 011 818
- US-A- 5 495 945
- US-A1- 2007 012 590
- US-B1- 6 193 902

## Description

La présente invention concerne une boîte de conditionnement pour vers de mer, en matière plastique sensiblement parallélépipédique.

Elle concerne également un emballage pour ensemble de barquettes pour vers de mer appartenant à de telles boîtes. Les documents CA 2268 998, HC 101 1818, FR 7735 288 et US 619 3902 décrivent des boîtes et des emballages utilisables pour le conditionnement d'animaux marins vivants.

L'invention trouve une application particulièrement importante, bien que non exclusive dans le domaine du conditionnement de vers américains (dit « blood worms » en langue anglosaxonne) en provenance du continent Nord-américain, par exemple pour leur importation en Europe par avion. De tels vers de mer sont utilisés comme appâts vivants pour la pêche de loisir en mer.

On connaît déjà des systèmes de conditionnement de vers de mer vivants permettant leur transport aérien. De tels systèmes consistent en de grandes boîtes en carton contenant un fond de papier journal recouvert d'une litière d'algues fraîches et humides, permettant le transport de l'ordre de cent à cent trente vers vivants par boîte. En général, un réfrigérant est introduit dans le carton lors du remplissage pour préserver une certaine fraîcheur durant le transport qui dure environ soixante heures avant d'atteindre le point de vente en magasin de pêche.

Un tel système présente des inconvénients. La marchandise ne peut pas, en effet, être revendue telle quelle aux pêcheurs car une boîte d'une centaine de vers est une unité trop importante pour la vente au détail.

Il est donc nécessaire d'introduire dans le processus une opération de tri, avec comptage, des vers avant de les reconditionner par plus petites quantités. En particulier, le détaillant va devoir fractionner le contenu en extrayant les vers sains de l'algue des boîtes, un par un, avant de les transférer dans des petits récipients préalablement munis d'un support ajouté. Ce support est, en général, formé par une petite quantité d'algues lavées provenant de la boîte initiale. Une couche de sable humide est parfois également utilisée, mais pose un problème de dosage, le nombre de vers par boîte étant alors variable de cinq à dix, en fonction des besoins.

De tels systèmes sont coûteux en temps passé. Or les détaillants ont peu de temps à consacrer au tri étant avant tout absorbés par leur activité de vente au comptoir. Ce travail est de plus fastidieux, et demande de la dextérité. Il est salissant, ce qui nécessite un lavage fréquent des mains des vendeurs qui doivent être propres et sèches pour utiliser correctement le clavier de la caisse enregistreuse ou de l'ordinateur et/ou pour manipuler la monnaie.

Rappelons ici que le détaillant n'a que peu de possibilités d'effectuer un tel travail avant ou après l'ouverture de son magasin, celui-ci ouvrant tôt et fermant tard, pour les besoins de son commerce avec les pêcheurs de loisir.

Un tel tri nécessite des surfaces ou plans de travail souvent inexistants dans un magasin de pêche. Ce temps perdu au conditionnement génère une attente des clients en cas d'affluence et présente un coût en matériel puisqu'en plus des boîtes de conditionnement initiales prévues pour le transport, il faut prévoir un deuxième jeu de boîtes, plus petites pour la vente, coût qui est à la charge du détaillant.

Par ailleurs, ce dernier ne possède pas la maîtrise du coût des vers proprement dits. C'est en effet lui qui assume l'essentiel du risque lié aux mauvaises surprises lors du tri des vers par petites quantités du fait de la présence de vers morts, impropres à la vente car trop petits ou même moins nombreux que prévus (mauvais comptage au départ, volontaire ou involontaire).

Une telle démarque est actuellement de l'ordre de 10 à 15%. Il s'ensuit des conflits avec le grossiste du fait de cette vente en vrac et/ou des surcoûts sur la boîte si le grossiste se charge de ce reconditionnement actuellement pratiquement uniquement effectué chez le détaillant.

La présente invention vise à pallier ces inconvénients. Pour cela elle part d'une idée entièrement nouvelle dans le cadre du conditionnement de vers de mer vivants de ce type pour transports aériens, à savoir de prévoir un conditionnement itemisé par petites boîtes ou barquettes à la source, c'est-à-dire quasiment au moment du ramassage avec un coût moyen par ver inférieur ou égal au coût actuel, tout en garantissant des vers de qualité supérieure.

Ceux-ci font en effet l'objet d'une meilleure conservation car ils vont arriver plus frais, moins manipulés et mieux triés, avec un nombre de vers fiable par boîte, ce qui limite ou évite les pertes pour les détaillants.

Ceux-ci s'affranchissent de plus du travail pénible et stressant d'un tri sur place au détriment de leur clientèle.

On connaît certes des emballages en carton, en polystyrène ou même en matière plastique pour quantité de vers limitée.

De telles boîtes ne sont cependant pas aisées à remplir à forte cadence, par exemple de manière semiautomatique.

Elles ne sont pas non plus facilement saisissables par les utilisateurs pour être déplacées en bloc.

Destinées à contenir un support en algues, ou en sable qui doit rester humide, elles ne sont pas facilement humidifiables ou réhumidifiables. En particulier un support du type sable mouillé (pourtant préféré pour les vers), support qui a tendance à s'assécher, est difficile à utiliser.

Enfin, ces boîtes sont consommatrices d'espaces, ne sont pas aisément stockables et blocables ensemble dans un même packaging réfrigéré.

La présente invention vise à fournir une boîte et un emballage répondant mieux que ceux antérieurement connus aux exigences de la pratique, notamment en ce qu'elle permet un stockage aisé des vers dans des barquettes auto-respirantes à parois étanches, empilables les unes dans les autres avec leur contenu, facilement saisissables et rangeables par groupe dans l'emballage et qui, bien que sans couvercle, garantissent un blocage des vers (qui ne peuvent sortir du fait de l'empilage).

L'empilabilité des boîtes remplies entraîne aussi une réduction considérable du volume de stockage et de transport des boîtes pleines. Cette nouvelle boîte offre de plus une possibilité aisée de rinçage du contenu particulièrement pratique et très rapide, et de réhumidification des supports, toutes boîtes empilées.

Dans ce but, la présente invention propose essentiellement une boîte de conditionnement pour vers de mer, en matière plastique sensiblement parallélépipédique, caractérisée en ce que elle comporte une barquette de rétention des vers de mer et de leur support de sections latérales, longitudinales et transversales, trapézoïdales isocèles dirigées vers le bas, ladite barquette présentant des parois pleines avec un bord supérieur muni d'un rembordement dont la périphérie est perpendiculaire au fond et située entièrement à distance de la face externe des parois latérales, et s'étend vers le bas sur une hauteur comprise entre le 1/4 et les 2/3 de la hauteur de ladite barquette (par exemple 1/3), ledit rembordement comprenant des pattes de rigidification perpendiculaires audit rembordement, régulièrement disposées le long dudit rembordement, et de longueur supérieure à la hauteur dudit rembordement, lesdites pattes étant agencées pour que lorsque la barquette dite supérieure est emboîtée sur une barquette dite inférieure l'appui des pattes du rembordement supérieur sur le dessus du rembordement inférieur ménage d'une part un espace de rétention des vers et de leur support entre la face inférieure de la barquette supérieure et la face supérieure de la barquette inférieure et d'autre part un espace vide en chicane entre le volume d'air emprisonné entre lesdites faces et l'extérieur des barquettes.

Avantageusement le vide entre les faces inférieures de deux barquettes empilées génère un réseau de canaux de circulation des vers, compte tenu de la forme particulière des fonds en creux et en bosse.

Les périphéries des rembordements de deux barquettes adjacentes, verticales, et s'étendant sur une hauteur suffisante, permettent une manipulation extrêmement rapide des boîtes. En effet, elles autorisent notamment de les saisir facilement par groupe de deux, trois ou quatre avec une seule main en les plaquant simplement les unes contre les autres.

Les espaces vides en chicane entre deux rembordements, vont quant à eux permettre l'écoulement de l'eau en trop plein tout en permettant la rétention en position bloquée latéralement dans l'emballage par exemple, ainsi que la respiration des vers de mer.

Ceux-ci ne peuvent pas sortir du fait de l'étroitesse des chicanes.

Dans des modes de réalisation avantageux on a de plus recours à l'une et/ou à l'autre des dispositions suivantes :
- le rembordement comporte quatre coins arrondis munis chacun d'une encoche ouverte vers le bas. Avantageusement, chaque encoche définit une lèvre d'accrochage à proximité du dessus dudit rembordement ;
- les pattes de rigidification comportent en partie basse une portion en saillie, en forme de triangle de centrage vers le bas ;
- l'angle des trapèzes isocèles est compris entre 2° et 5° ;
- la face supérieure du fond de la barquette présente une ou deux portions longitudinales en ressaut par rapport à ladite face, définissant des canaux latéraux avec les parois.

Avantageusement sa face inférieure comporte quant à elle les portions correspondante en creux par exemple de telle sorte que la distance entre face supérieure de la barquette du dessous et face inférieure de la barquette du dessus restent à une distance constante en cas d'empilage ;
- la boîte comporte de plus un couvercle rectangulaire ou sensiblement rectangulaire muni d'un rebord surchappant s'étendant vers le bas et vers l'extérieur du couvercle, propre à coopérer à frottement doux avec la périphérie du rembordement ;
- le rebord surchappant comporte des parties en saillie vers l'intérieur agencées pour s'encliquer dans les encoches des coins arrondis.

L'invention propose également un emballage par exemple en polystyrène, pour barquettes appartenant à des boîtes telles que décrites ci-avant, par exemple d'au moins quatre piles de barquettes, par exemple de trois à dix barquettes. L'emballage peut alors avantageusement être muni d'un couvercle tel que décrit ci-après.

L'invention propose aussi un emballage pour, et/ou un système formé de, au moins une pile de barquettes telles que décrites ci-dessus, ouvertes, chargées d'un support humidifié et de vers de mer, lesdites barquettes étant emboîtées les unes dans les autres.

Une telle pile permet le transport de vers vivants dans des barquettes sans couvercle, si ce n'est éventuellement un couvercle tel que décrit ci-dessus, pour la barquette du dessus de la pile, chaque barquette du dessus servant de couvercle pour la barquette du dessous.

Une telle pile n'existait pas dans l'art antérieur, aucun utilisateur n'ayant pensé se passer du couvercle pour des boîtes contenant des vers vivants.

Avec les barquettes selon l'invention, qui ménagent un espace entre les fonds, et permet la respiration des vers, sans risque de les voir sortir de leur emballage, un gain important de volume de stockage est possible, et un transport simple et rapide à mettre en oeuvre est obtenu sous forme de cette pile.

L'utilisateur n'a ainsi pas besoin de rouvrir les boîtes pour examiner les vers et/ou les compter ; il lui suffit de les soulever.

L'invention propose de plus et plus particulièrement un emballage pour barquettes pour vers de mer, caractérisé en ce que il comprend une caisse parallélépipédique en polystyrène de rétention de huit piles d'au moins quatre desdites barquettes ouvertes propres à être préalablement chargées d'un support humidifié et de vers de mer, lesdites barquettes d'une même pile étant emboîtées les unes dans les autres et les huit piles étant disposées autour d'une pièce réfrigérante centrale de blocage de piles contre les parois internes de la caisse, le bord supérieur de la caisse comprenant une rainure ou une saillie sur toute sa périphérie, et en ce qu'il comporte un couvercle en polystyrène dont la face interne comprend une saillie ou une rainure propre à coopérer par emboîtement avec ladite saillie ou ladite rainure de la périphérie de la caisse et est munie d'un méplat central en saillie vers l'intérieur de la caisse , percé de part en part du couvercle pour autoriser l'aération, et agencé pour coopérer avec la pièce centrale de façon à bloquer tout écoulement de liquide vers l'extérieur de la caisse.

Avantageusement l'emballage comporte huit piles de dix barquettes ouvertes.

Egalement avantageusement l'emballage comporte sur au moins une face externe, une gorge transversale ou longitudinale formant passage d'aération entre deux emballages empilés l'un sur l'autre.

L'invention sera mieux comprise à la lecture de la description qui suit de modes de réalisation donnés ci-après à titre d'exemples non limitatifs. Elle se réfère aux dessins qui l'accompagne dans lesquels :
La figure 1 est une vue en perspective de deux barquettes empilées, selon le mode de réalisation de l'invention plus particulièrement décrit ici, avec un couvercle pour conditionnement et présentation finale au client.
La figure 2 montre un plateau de stockage de barquettes de la figure 1, à plat, pour remplissage puis pour déplacement manuel, par exemple quatre par quatre, et stockage ou empilage desdites barquettes.
La figure 3 montre une pile de barquettes empilées selon un mode de réalisation de l'invention.
La figure 3A est une vue schématique en coupe de la pile lors de son rinçage.
La figure 4 est une vue en perspective d'un emballage pour huit piles, de barquettes, correspondant à la figure 3.
Les figures 5 et 6 sont respectivement les vues en coupe et de dessus de l'emballage de la figure 4.
La figure 7 est une vue en perspective de l'emballage de la figure 4 avec couvercle retourné.

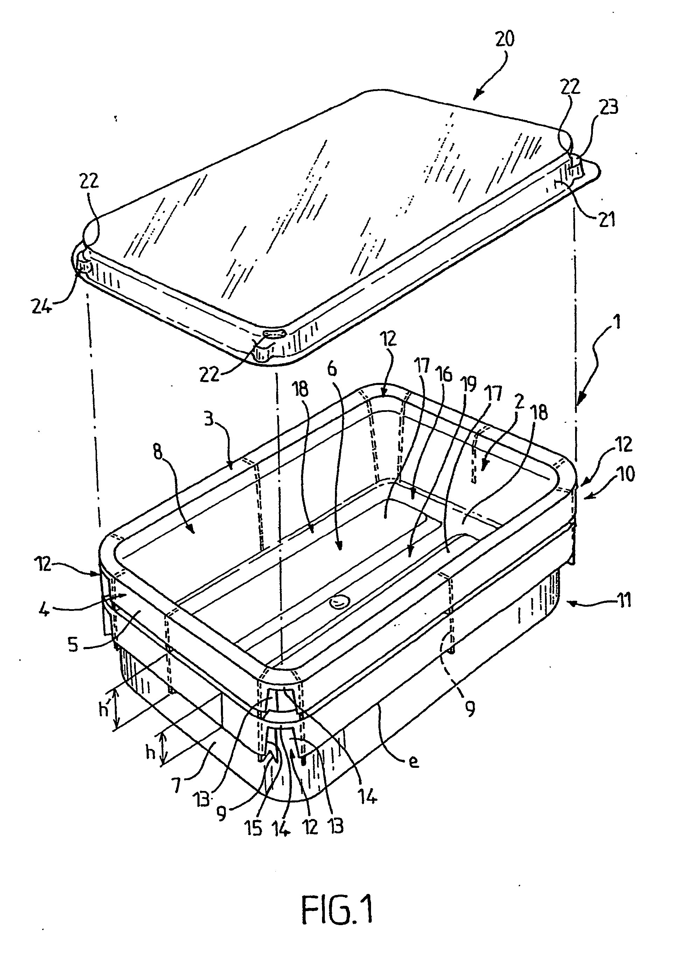

La figure 1 montre notamment une boîte 1 de conditionnement pour vers de mer (non représentés) en matière plastique, sensiblement parallélépipédique.

La boîte 1 comporte une barquette 2 de rétention des vers de mer et de leur support (également non représenté) de section latérale et transversale trapézoïdale isocèle dirigée vers le bas.

La barquette présente un bord supérieur 3 muni d'un rembordement 4 dont la périphérie 5 perpendiculaire au fond 6 est située entièrement à distance de la face externe 7 des parois 8 latérales.

Les parois 8 sont pleines, c'est à dire dénuées d'orifice ou d'ouverture, les rendant parfaitement étanches. Elles sont par exemple en matière plastique transparente ou translucide.

La périphérie 5 s'étend vers le bas sur une hauteur h correspondant au tiers de la hauteur H de la barquette.

Le rembordement 4 comporte des pattes 9 de rigidification perpendiculaires au rembordement et de longueur h' supérieure à la hauteur h du rembordement de sorte que, lorsque la barquette supérieure 10 (également désignée par la référence 2 ci-dessus) est emboîtée sur une barquette dite inférieure 11, l'appui des pattes de rembordement 9 sur le dessus du rembordement inférieur 3 ménage d'une part un espace de rétention des vers et de leur support entre la face inférieure de la barquette supérieure 10 et la face supérieure de la barquette inférieure 11, et d'autre part un espace vide en chicane e entre le volume d'air emprisonné entre lesdites faces et l'extérieur des barquettes.

Les pattes 9 sont régulièrement réparties le long du rembordement, par exemple et avantageusement deux pattes de part et d'autre de chaque angle et une patte centrée sur chacune des parties de rembordement longitudinale et transversale des parois de la boîte.

Dans le mode de réalisation plus particulièrement décrit ici, le rembordement 3 comporte quatre coins 12 munis chacun d'une encoche 13 ouverte vers le bas définissant une lèvre d'accrochage 14 à proximité du dessus 3 dudit rembordement.

Les pattes de rigidification 9 comportent en partie basse une portion 15 en forme de triangle de centrage vers le bas lorsque on emboîte une barquette dans l'autre.

L'angle des trapèzes isocèles dans le mode de réalisation plus particulièrement décrit ici est de 3°.

La face supérieure 16 du fond de la barquette présente deux portions longitudinales 17 en ressaut par rapport à ladite face, par exemple d'épaisseur de 3 à 5mm, par exemple 4mm, de façon à aménager tout autour de ces deux portions en ressaut sensiblement parallélépipédiques, des rigoles 18 de largeur égale au 1/3 de celle des portions, lesdites rigoles étant donc situées entre lesdites portions en ressaut 17 et les parois, et à ménager entre les deux portions en ressaut, une rigole centrale 19, par exemple de même longueur et de même largeur que les rigoles 18, de sorte qu'une couche de support va pouvoir être creusée entre les ressauts par les vers lorsque ces derniers seront mis dans le sable et dans la barquette.

La barquette peut également être munie, lorsqu'elle est désempilée des barquettes du dessous, d'un couvercle 20 rectangulaire ou sensiblement rectangulaire, muni de bords surchappant 21 s'étendant vers le bas et vers l'extérieur du couvercle, propre à coopérer à frottement doux avec la périphérie 5 du rembordement 4, par exemple sur toute sa hauteur.

Un léger jeu est également possible.

La surface supérieure du couvercle par exemple en plastique transparent, sert avantageusement de support publicitaire et/ou indicateur du contenu de la boîte.

Dans le mode de réalisation plus particulièrement décrit ici, le rebord surchappant 21 comporte également des parties en saillie 22 vers l'intérieur agencées pour s'encliquer dans les encoches 14 des coins arrondis 12.

Le couvercle coiffant 20 comporte de plus des petits évidements 23 en forme d'encoche qui vont servir de détrompeur lors de la fabrication des couvercles et qui vont ménager de plus entre les rebords 3 de la périphérie du rembordement et le volume du couvercle un espace supplémentaire 24 permettant l'écoulement de l'eau lors du rinçage à l'eau de mer des barquettes et de leur contenu.

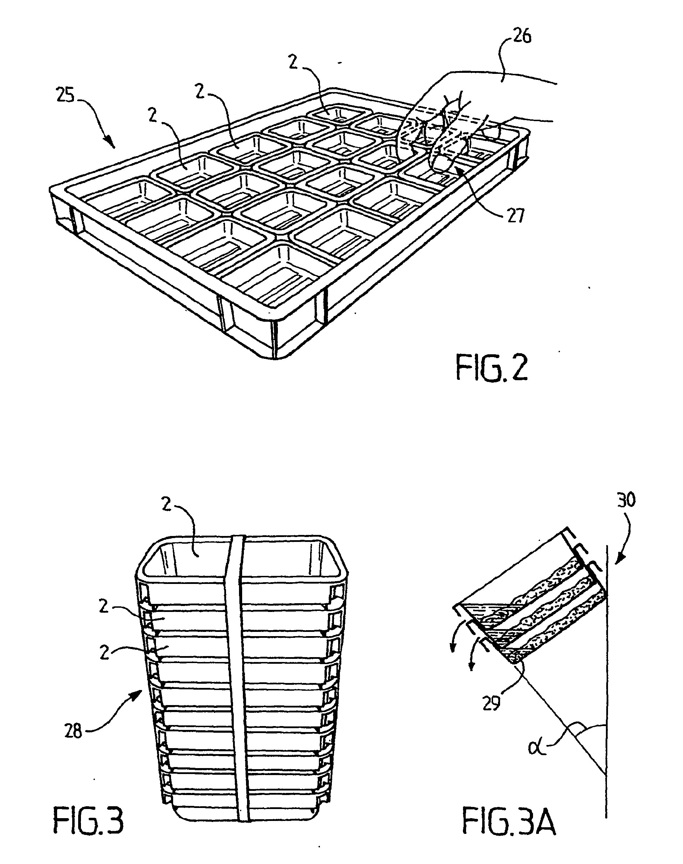

On a représenté sur la figure 2 un plateau 25 muni de quatre rangées de cinq barquettes aisément préhensibles par quatre. Ainsi la main 26 d'un utilisateur est capable de prendre un jeu de quatre barquettes 27 d'un bloc, les périphéries 5 des rembordements venant se plaquer les uns contre les autres de façon précise, et permettant ainsi cette préhension particulière entraînant un chargement et un déchargement du plateau particulièrement rapide et efficace.

La stabilité des barquettes ainsi collées les unes aux autres et leur parfait alignement vertical et horizontal dans cette pose autorise des empilages et désempilages multiples extrêmement rapides et aisés.

On a représenté sur la figure 3 une pile 28 de dix barquettes 2 selon l'invention, sans couvercle, empilables les unes sur les autres.

La figure 3A montre schématiquement une portion de pile pivotées d'un angle α permettant l'humidification des supports grâce au dosage, en fonction de l'angle α, de la quantité d'eau 29, propre à rester à l'intérieur de l'emballage.

Grâce à la configuration des barquettes selon l'invention, il est dès lors possible de rafraîchir et de régénérer les vers de façon rapide et efficace.

On peut en effet plonger entièrement la pile dans l'eau de mer, puis ensuite l'incliner pour en évacuer l'eau, de telle façon que ne reste dans les emballages qu'une petite quantité d'eau 29, permettant de maintenir l'humidité du support et donc des vers de mer qui y sont stockés.

Rappelons que les vers de mer sont des animaux particulièrement fragiles.

Or les emballages en matière plastique tels que prévus, particulièrement favorables à un support sous forme de sable humide, vont permettre au vers de jeûner et en même temps le nettoyage des déchets humides que ces derniers vont générer pendant le jeûne prolongé correspondant à leur transport.

Ce problème n'est généralement pas pris en compte par l'art antérieur qui, soit ne traite pas le cas du ver de mer ce qui démontre qu'il n'a pas identifié le problème spécifique posé par ces derniers, soit les amalgame à tort avec les vers de terre.

Or, pour vivre le ver de mer a lui, besoin des marées et d'une oxygénation importante, ce qui l'amène à se développer uniquement en bordure des côtes, dans la zone que l'on désigne classiquement en langue anglo-saxonne de « splash zone ».

Privé de cet environnement et s'il n'est pas stocké dans des conditions optimisées, il meurt rapidement.

Avec les boîtes telles que prévues qui lui permettent de se préserver au mieux, et pouvant être réhumidifiées de façon aisée, avec un degré hydrométrique calculé [en fonction de l'angle α de renversement de la pile (cf. figure 3A)], tout en permettant une aération pour la respiration des vers, grâce aux espaces qui sont ménagés entre rembordement et parois, les vers sont bien conservés.

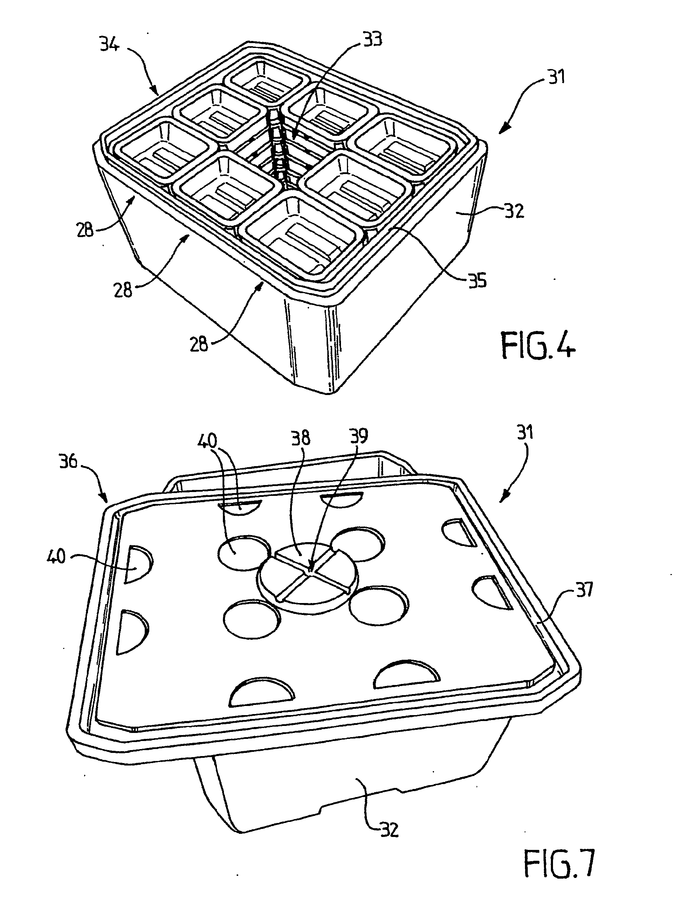

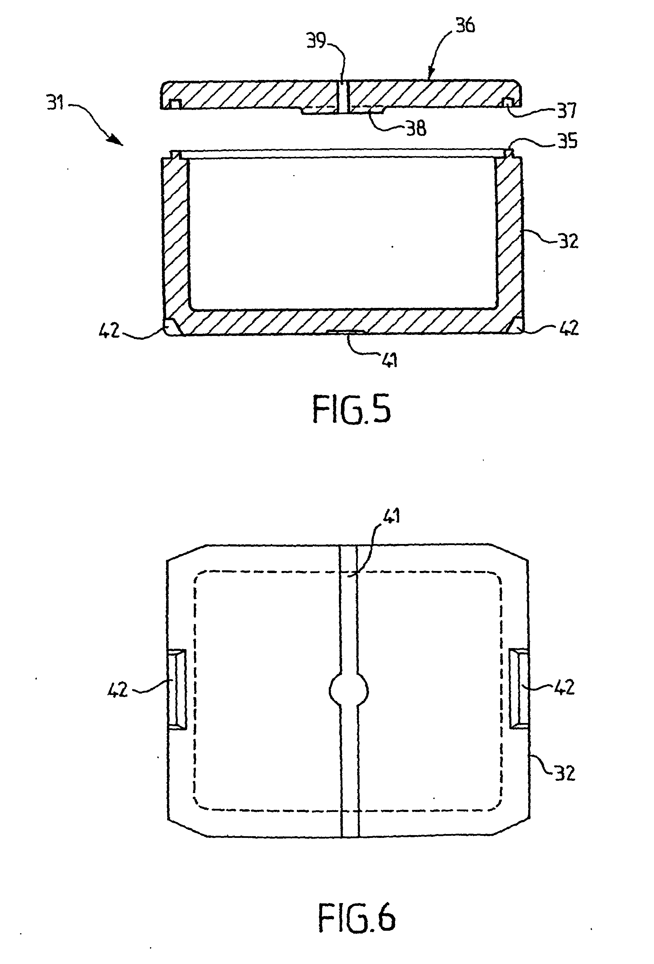

On va maintenant décrire en référence aux figures 4, 5, 6 et 7 un emballage 31 parallélépipédique en matériaux polystyrène pour barquettes telles que décrites ci-avant.

Celui-ci comprend une caisse parallélépipédique 32 qui autorise le stockage d'un ensemble de barquettes pour vers de mer, à savoir huit piles 28 d'au moins quatre desdites barquettes 2.

Lesdites barquettes sont préalablement ouvertes et chargées d'un support humidifié et de vers de mer (non représentés), puis emboîtées les unes dans les autres comme on l'a vu en référence à la figure 3 pour former huit piles de dix boîtes.

Celles-ci sont alors disposées autour d'une pièce réfrigérante (non représentée), centrale, de blocage des piles contre les parois internes de la caisse,placée dans l'évidement central 33 formé entre les piles adjacentes.

Le bord supérieur 33 de la caisse 32 comprend une saillie 34 sur toute sa périphérie par exemple de 2 à 3 mm voire 1 cm de hauteur.

Ceci va <> une fermeture parfaitement étanche au niveau de la jonction caisse/couvercle.

L'emballage 31 comporte en effet et de plus un couvercle 36 muni sur sa périphérie d'une rainure 37 propre à coopérer par emboîtement avec la saillie 34.

Le couvercle 36 est muni d'un méplat central 38, par exemple circulaire, en saillie vers l'intérieur de la caisse, percé de part en part d'un trou 39 pour autoriser l'aération.

Il est agencé pour coopérer avec la pièce centrale (non représentée) de façon à bloquer tout écoulement de liquide vers l'extérieur de la caisse permettant notamment le transport aérien.

Des petits évidements 40, en forme de cercle vers le centre ou de demi-lune vers la périphérie, sont également avantageusement disposés de façon répartie pour favoriser l'aération entre les boîtes, à cheval, en position fermée du couvercle sur les périphéries des rembordements de deux ou trois barquettes adjacentes.

La caisse 32 comporte également sur au moins une face externe, une gorge transversale longitudinale 41 formant passage d'aération entre emballages empilés, et des petits évidements latéraux 42, permettant une bonne prise en main de la caisse lors des opérations de manutention.

On va maintenant décrire la mise en oeuvre et le fonctionnement des barquettes et de l'emballage selon l'invention.

Après avoir disposé à plat les barquettes sur un plateau 25 permettant leur transport et leur remplissage, par exemple par série de vingt, celles-ci sont remplies, par exemple de façon semi automatique, avec un produit support par exemple formé de sable sec, qui est ensuite humidifié avec des doses d'eau de mer correspondantes.

Les barquettes étant destinées à recevoir de l'ordre de cinq à huit vers, les doses de sable sec sont par exemple comprises entre 25 g et 40 g, avantageusement 30 à 32 g, les quantités d'eau d'humidification étant alors de l'ordre de 5 à 15 ml d'eau de mer, avantageusement 7 à 10 ml.

Dans un autre mode de réalisation, les quantités de sable sec et d'eau peuvent être par exemple simultanément doublée.

En fait on observe une bonne tenue des vers pour des proportions entre sable et eau, de 25 à 30 % en poids d'eau pour 100 % en poids de sable.

Cette humidification ou réhumidification peut être obtenue en plongeant la pile 28, par exemple sanglée entre elles par un élastique, pour maintenir les barquettes fixées entre elles, dans un bac d'eau de mer, puis en éliminant le trop plein en basculant les barquettes d'un angle α, par exemple 45° (cf figure 3A).

Une fois les barquettes du plateau 25 chargées du matériau support, les vers vivants sont disposés dans les barquettes, en les comptant au fur et à mesure.

Ils vont rapidement pouvoir s'enfouir entre les portions en ressaut 17, en recherchant leur milieu naturel humide et protecteur.

Les barquettes sont alors saisies manuellement (cf figure 2) de façon rapide et aisée, pour constituer par empilage quatre piles d'un coup.

Ces piles sont ensuite disposées dans la caisse 32 en ménageant un évidement central qui permet d'une part la mise en place et l'extraction facile des piles, et d'autre part un emplacement pour un bloc réfrigérant connu en lui-même, qui assure également le blocage des piles dans l'emballage. La fermeture du couvercle 36, de façon étanche compte tenu de l'emboîtement rainure 37/saillie 34 est alors effectuée et va permettre après sanglage et scotchage du couvercle avec la caisse en passant par des petits évidements 42, un transport aérien respectueux des normes applicables très exigeantes.

Après le transport, les emballages sont ouverts par le détaillant, qui n'a plus qu'à les extraire en les contrôlant visuellement.

Il peut alors les rafraîchir et les rincer comme décrit ci-avant, et désempiler les barquettes à la demande en les refermant par des couvercles au fur et à mesure de ses besoins de vente.

Comme il va de soi et comme il résulte de ce qui précède, la présente invention n'est pas limitée au mode de réalisation plus particulièrement décrit. Elle en embrasse au contraire toutes les variantes et notamment celles où l'emballage comporte plus de barquettes et/ou de piles de barquettes.

## Revendications

1. Boîte (1) de conditionnement pour animaux marins vivants, en matière plastique, sensiblement parallélépipédique, comportant une barquette (2, 10, 11) de rétention des animaux et de leur support de sections latérales, longitudinale et transversale, trapézoïdales isocèles dirigées vers le bas, ladite barquette présentant un bord supérieur (3) muni d'un rembordement (4) dont la périphérie (5) est perpendiculaire au fond (6) et située entièrement à distance de la face externe (7) des parois (8) latérales, et s'étend vers le bas sur une hauteur comprise entre le 1/4 et les 2/3 de la hauteur (H) de ladite barquette, **caractérisée en ce que** les parois (8) latérales sont pleines, les animaux marins vivants étant des vers de mers, **en ce que** ledit rembordement comprend des pattes (9) de rigidification perpendiculaires audit rembordement et de longueur supérieure h' à la hauteur dudit rembordement, de sorte que lorsque ladite barquette dite supérieure (10) est emboîtée sur une barquette dite inférieure (11) l'appui des pattes (9) du rembordement supérieur sur le dessus du rembordement inférieur ménage un espace de rétention des vers et de leur support entre la face inférieure de la barquette supérieure et la face supérieure de la barquette inférieure et d'autre part un espace vide (e) en chicane entre le volume d'air emprisonné entre lesdites faces et l'extérieur des barquettes.

2. Boîte selon la revendication 1, **caractérisée en ce que** le rembordement (4) comporte quatre coins arrondis (12) munis chacun d'une encoche ouverte (13) vers le bas définissant une lèvre (14) d'accrochage à proximité du dessus dudit rembordement.

3. Boîte selon l'une quelconque des revendications précédentes, **caractérisée en ce que** les pattes (9) de rigidification comportent en partie basse une portion (15) en saillie, en forme de triangle de centrage vers le bas.

4. Boîte selon l'une quelconque des revendications précédentes, **caractérisée en ce que** l'angle des trapèzes isocèles est compris entre 2° et 5°.

5. Boîte selon l'une quelconque des revendications précédentes, **caractérisée en ce que** la face supérieure (16) du fond (6) de la barquette présente une ou deux portions longitudinales (17) en ressaut par rapport à ladite face.

6. Boîte selon l'une quelconque des revendications précédentes, **caractérisée en ce qu'**elle comporte de plus un couvercle (20) rectangulaire ou sensiblement rectangulaire muni d'un rebord (21) s'étendant vers le bas et vers l'extérieur du couvercle, propre à coopérer à frottement doux avec la périphérie (5) du rembordement.

7. Boîte selon la revendication 6, dépendante de la 2, **caractérisée en ce que** le rebord (21) surchappant comporte des parties(22) en saillie vers l'intérieur agencées pour s'encliquer dans les encoches (13) des coins arrondis (12).

8. Système formé d'au moins une pile de barquettes ouvertes, **caractérisé en ce que** lesdites barquettes sont préalablement chargées d'un support humidifié et propres à contenir des vers de mer, **en ce que** lesdites barquettes sont emboîtées les unes dans les autres, chacune appartenant à une boîte selon l'une quelconque des revendications 1 à 5.

9. Système selon la revendication 8, **caractérisé en ce que** la barquette du dessus de la pile comporte de plus un couvercle.

10. Système selon la revendication 9, **caractérisé en ce que** le couvercle de la barquette du dessus est selon la revendication 6.

11. Système selon la revendication 10, **caractérisé en ce que** le rebord surchappant de la boîte du dessus comporte des parties(22) en saillie vers l'intérieur agencées pour s'encliquer dans les encoches (13) des coins arrondis (12).

12. Emballage (31) pour ensemble de barquettes (2) pour vers de mer appartenant à des boîtes selon l'une quelconque des revendications 1 à 5, **caractérisé en ce que** il comprend une caisse (32) parallélépipédique en polystyrène de rétention de huit piles (28) d'au moins quatre desdites barquettes ouvertes propres à être préalablement chargées d'un support humidifié et de vers de mer, lesdites barquettes d'une même pile étant emboîtées les unes dans les autres et les huit piles étant disposées autour d'une pièce réfrigérante centrale de blocage de piles (28) contre les parois internes de la caisse, le bord supérieur (33) de la caisse comprenant une rainure ou une saillie (34) sur toute sa périphérie, et **en ce qu'**il comporte un couvercle (36) en polystyrène dont la face interne comprend une rainure (37) propre à coopérer par emboîtement avec ladite saillie de la périphérie de la caisse et est munie d'un méplat central (38) en saillie vers l'intérieur de la caisse , percé de part en part du couvercle pour autoriser l'aération, et agencé pour coopérer avec la pièce centrale de façon à bloquer tout écoulement de liquide vers l'extérieur de caisse.

13. Emballage selon la revendication 12, **caractérisé en ce que** il comporte huit piles (28) de dix barquettes ouvertes.

14. Emballage selon l'une quelconque des revendications 12 et 13, **caractérisé en ce que** il comporte sur au moins une face externe, une gorge transversale (41) ou longitudinale formant passage d'aération.

## Claims

1. Packing box (1) for live marine animals, which is made of plastic, substantially parallelepipedal, and comprises a boat-shaped receptacle (2, 10, 11) for retention of the animals and support thereof, with downwardly directed isosceles trapezoidal, lateral, longitudinal and transverse sections, said boat-shaped receptacle presenting an upper edge (3) provided with a turned-down rim (4) the periphery (5) of which is perpendicular to the bottom (6) and located entirely at a distance from the external face (7) of the lateral walls (8), and extends downwards over a height of between 1/4 and 2/3 of the height (H) of said boat-shaped receptacle, **characterised in that** the lateral walls (8) are solid, the live marine animals being marine worms, **in that** said turned-down rim comprises stiffening feet (9) perpendicular to said turned-down rim and of a length h' greater than the height of said turned-down rim, such that when said boat-shaped receptacle referred to as an upper boat-shaped receptacle (10) is fitted over a socalled lower boat-shaped receptacle (11) the bearing of the feet (9) of the upper turned-down rim on the top of the lower turned-down rim creates a space for retention of the worms and support thereof between the lower face of the upper boat-shaped receptacle and the upper face of the lower boat-shaped receptacle and secondly an empty space (e) in the form of a chicane between the volume of air trapped between said faces and the exterior of the boat-shaped receptacles.

2. Box according to claim 1, **characterised in that** the turned-down rim (4) comprises four rounded corners (12) each provided with an open notch (13) directed downwards
and defining a fastening lip (14) close to the top of said turned-down rim.

3. Box according to any one of the preceding claims, **characterised in that** the stiffening feet (9) comprise in their lower portion a protruding portion (15) in the form of a downwardly directed centering triangle.

4. Box according to any one of the preceding claims, **characterised in that** the angle of the isosceles trapeziums lies between 2° and 5°.

5. Box according to any one of the preceding claims, **characterised in that** the upper face (16) of the bottom (6) of the boat-shaped receptacle presents one or two longitudinal portions (17) which project in relation to said face.

6. Box according to any one of the preceding claims, **characterised in that** it additionally comprises a rectangular or substantially rectangular lid (20) provided with a flange (21) extending downwards and towards the exterior of the lid, suitable for cooperating through gentle friction with the periphery (5) of the turned-down rim.

7. Box according to claim 6, depending on claim 2, **characterised in that** the capping flange (21) comprises portions (22) protruding towards the interior and arranged to engage in the notches (13) of the rounded corners (12).

8. System formed of at least one stack of open boat-shaped receptacles, **characterised in that** said boat-shaped receptacles are first loaded with a moistened support suitable for containing marine worms, **in that** said boat-shaped receptacles are engaged one in another, each belonging to a box according to any one of claims 1 to 5.

9. System according to claim 8, **characterised in that** the boat-shaped receptacle at the top of the stack also comprises a lid.

10. System according to claim 9, **characterised in that** the lid of the top boat-shaped receptacle is according to claim 6.

11. System according to claim 10, **characterised in that** the capping flange of the top box comprises portions (22) protruding towards the interior and arranged to engage in the notches (13) of the rounded corners (12).

12. Packaging (31) for a set of boat-shaped receptacles (2) for marine worms belonging to boxes according to any one of claims 1 to 5, **characterised in that** it comprises a parallelepipedal case (32) made of polystyrene for holding eight stacks (28) of at least four of said open boat-shaped receptacles suitable for being first loaded with a moistened support and marine worms, said boat-shaped receptacles of a same stack being engaged one in another and the eight stacks being disposed around a central refrigerating part for locking stacks (28) against the internal walls of the case, the upper edge (33) of the case comprising a groove or a protrusion (34) over its entire periphery, and **in that** it comprises a lid (36) made of polystyrene the internal face of which comprises a groove (37) suitable for co-operation by engagement with said protrusion of the periphery of the case and is provided with a central flat (38) protruding towards the interior of the case, pierced on either side of the lid to allow aeration, and arranged to co-operate with the central part so as to prevent any escape of liquid to the exterior of the case.

13. Packaging according to claim 12, **characterised in that** it comprises eight stacks (28) of ten open boat-shaped receptacles.

14. Packaging according to any one of claims 12 and 13, **characterised in that** on at least one external face it comprises a transverse or longitudinal groove (41) forming a passage for aeration.

## Patentansprüche

1. Lagerungskasten (1) aus Kunststoff für lebende Meerestiere, welcher weitestgehend quaderförmig ausgebildet ist, mit einer die Tiere und deren Tragelement aufnehmenden Schale (2, 10, 11), deren nach unten gerichtete Seitenlängs- und -querschnitte die Form eines gleichschenkeligen Trapezes aufweisen, wobei die Schale einen oberen Rand (3) mit einer Umrandung (4) aufweist, deren Umfang (5) senkrecht zu dem Boden (6) steht, die vollständig von der Außenfläche (7) der Seitenwände (8) beabstandet ist und die sich nach unten auf einer Höhe erstreckt, die zwischen 1/4 und 2/3 der Höhe (H) der Schale liegt,
**dadurch gekennzeichnet,**
**dass** die Seitenwände (8) Vollwände sind, wobei es sich bei den lebenden Meerestieren um Meereswürmer handelt, und
**dass** die Umrandung Versteifungsklammern[LSU1] (9) aufweist, die senkrecht zu der Umrandung stehen und deren Länge h' größer ist als die Höhe der Umrandung, so dass[LSU2], wenn die so genannte obere Schale (10) auf eine so genannte untere Schale (11) gesteckt ist, durch die auf der Oberseite der unteren Umrandung zur Auflage kommenden Klammern (9) der oberen Umrandung einerseits[LSU3] ein Raum für die Aufnahme der Würmer und deren Tragelement zwischen der Unterseite der oberen Schale und der Oberseite der unteren Schale und andererseits ein versetzt angeordneter Leerraum (e) zwischen dem zwischen den genannten Seiten eingeschlossenen Luftvolumen und der Außenumgebung der Schalen entstehen.

2. Kasten nach Anspruch 1,
**dadurch gekennzeichnet,**
**dass** die Umrandung (4) vier abgerundete Ecken (12) aufweist, die jeweils mit einer nach unten offenen Kerbe (13) versehen sind, welche eine Lippe (14) zum Einhängen in der Nähe der Oberseite der Umrandung definiert.

3. Kasten nach einem beliebigen der vorhergehenden Ansprüche,
**dadurch gekennzeichnet,**
**dass** die VersteifungsKlammern (9) im unteren Teil einen vorspringenden Abschnitt (15) in Form eines nach unten zentrierenden Dreiecks aufweisen.

4. Kasten nach einem beliebigen der vorhergehenden Ansprüche,
**dadurch gekennzeichnet,**
**dass** der Winkel der gleichschenkeligen Trapeze zwischen 2° und 5° liegt.

5. Kasten nach einem beliebigen der vorhergehenden Ansprüche,
**dadurch gekennzeichnet,**
**dass** die Oberseite (16) des Schalenbodens (6) einen oder zwei Längsabschnitte (17) aufweist, die in Bezug auf die genannte Seite vorragen.

6. Kasten nach einem beliebigen der vorhergehenden Ansprüche,
**dadurch gekennzeichnet,**
**dass** er ferner einen rechteckigen bzw. weitestgehend rechteckigen Deckel (20) mit einem Rand (21) aufweist, der sich nach unten und nach außen in Bezug auf den Deckel erstreckt und geeignet ist, durch leichten Reibschluss mit dem Umfang (5) der Umrandung zusammenzuwirken.

7. Kasten nach Anspruch 6 abhängig von Anspruch 2,
**dadurch gekennzeichnet,**
**dass** der Aufsatzrand (21) nach innen vorspringende Abschnitte (22) aufweist, die angeordnet sind, um in die Kerben (13) der abgerundeten Ecken (12) einzurasten.

8. System, das durch mindestens einen Stapel offener Schalen gebildet ist,
**dadurch gekennzeichnet,**
**dass** die Schalen vorhergehend mit einem benetzten Tragelement beladen werden und geeignet sind, Meereswürmer zu enthalten, und
**dass** die Schalen ineinander gesteckt sind, wobei sie jeweils zu einem Kasten nach einem der Ansprüche 1 bis 5 gehören.

9. System nach Anspruch 8,
**dadurch gekennzeichnet,**
**dass** die obere Schale des Stapels zusätzlich einen Deckel aufweist.

10. System nach Anspruch 9,
**dadurch gekennzeichnet,**
**dass** der Deckel der oberen Schale gemäß Anspruch 6 ausgebildet ist.

11. System nach Anspruch 10,
**dadurch gekennzeichnet,**
**dass** der Aufsatzrand des oberen Kastens nach innen vorspringende Abschnitte (22) aufweist, die angeordnet sind, um in die Kerben (13) der abgerundeten Ecken (12) einzurasten.

12. Verpackung (31) für einen Satz von zu Kästen nach einem beliebigen der Ansprüche 1 bis 5 gehörenden Meereswürmerschalen (2),
**dadurch gekennzeichnet,**
**dass** sie eine quaderförmige Polystyrolkiste (32) für die Aufnahme von acht Stapeln (28) aus mindestens vier der genannten offenen Schalen umfasst, welche geeignet sind, vorhergehend mit einem benetzten Tragelement und mit Meereswürmern beladen zu werden, wobei die Schalen eines selben Stapels ineinander gesteckt sind und die acht Stapel um einen zentralen Kühlteil angeordnet sind, der die Stapel (28) an die Innenwände der Kiste klemmt, wobei der obere Rand (33) der Kiste eine umlaufende Nut oder einen umlaufenden Vorsprung (34) aufweist, und
**dass** sie einen Polystyroldeckel (36) umfasst, dessen Innenseite eine Nut (37) aufweist, die geeignet ist, durch Formschluss mit dem Vorsprung des Kistenumfangs zusammenzuwirken, und mit einer zentralen Abflachung (38) versehen ist, die in das Innere der Kiste vorspringt, einen Durchbruch in dem Deckel bildet, um die Belüftung zu ermöglichen, und so angeordnet ist, um mit dem zentralen Teil derart zusammenzuwirken, dass jeglicher Flüssigkeitsabfluss aus der Kiste nach außen verhindert wird.

13. Verpackung nach Anspruch 12,
**dadurch gekennzeichnet,**
**dass** sie acht Stapel (28) aus zehn offenen Schalen aufweist.

14. Verpackung nach einem beliebigen der Ansprüche 12 und 13,
**dadurch gekennzeichnet,**
**dass** sie auf mindestens einer Außenfläche eine Quer- oder Längskehle (41) aufweist, die einen Belüftungskanal bildet.
